# EUROPÄISCHE PATENTSCHRIFT

(11) **EP 0 486 904 B1**
(45) Veröffentlichungstag und Bekanntmachung des Hinweises auf die Patenterteilung: **05.07.1995**
(21) Anmeldenummer: 91119108.8
(22) Anmeldetag: 09.11.1991
(51) Int. Cl.: D21B 1/32, D21B 1/02, D21C 5/02

(54) **Verfahren und Anlage zum Aufbereiten von Altpapier**
Method and installation for waste paper processing
Méthode et installation pour le traitement de vieux papiers

(30) Priorität: 23.11.1990 DE 4037230
(43) Veröffentlichungstag der Anmeldung: 27.05.1992
(73) Patentinhaber: J.M. Voith GmbH, D-89522 Heidenheim (DE)
(72) Erfinder: Ortner, Herbert, Dr., W-7920 Heidenheim (DE); Bähr, Theodor, W-7920 Heidenheim (DE); Musselmann, Walter, W-7920 Heidenheim (DE)
(74) Vertreter: Weitzel, Wolfgang, Dr.-Ing.

(56) Entgegenhaltungen:
- EP-A- 0 028 658
- EP-A- 0 233 517
- DE-A- 3 149 135
- DE-A- 3 332 389
- DE-A- 3 425 270
- US-A- 4 812 205

## Beschreibung

Die Erfindung betrifft ein Verfahren entsprechend dem Oberbegriff des Patentanspruches 1 sowie Anordnungen zur Durchführung des Verfahrens.

Ein Verfahren zur Aufbereitung von bedrucktem Altpapier ist aus der DE-A-3 040 998 bekannt. Bei diesem Verfahren erfolgt das Einweichen in einer um eine horizontale Achse rotierbaren Trommel. Als Konsistenz für den Einweichvorgang ist 20 bis 40 % angegeben. Danach wird das Altpapier mit Wasser stark verdünnt, so daß ein weiterer Sortiervorgang in einer um eine horizontale Achse rotierbaren, mit Siebperforationen versehenen Mantel ausgestatteten Trommel bei einer Konsistenz zwischen 8 und 12 % erfolgen kann. Die Lochgrößen betragen dort 4 bis 12 mm im Durchmesser.

Es hat sich herausgestellt, daß das Ablösen der Druckfarben von den Fasern effizienter durchgeführt werden kann, wenn das zu verarbeitende Altpapier vor dem eigentlichen Auflösen mittels Stofflöser oder Trommel mit einer Chemikalienlösung behandelt, d.h. quasi "voreingeweicht/vorimprägniert" wird.

Bei dieser "Vorimprägnierung" werden die Druckfarbenbindemittel soweit erweicht, daß die Druckfarbenteilchen beim nachfolgenden Auflöseprozeß wirkungsvoller von den Fasern abgetrennt werden können als es ohne "Vorimprägnierung" der Fall ist. Die Vorimprägnierung erfolgt am zweckmäßigsten bei einer Konsistenz von mehr als 12 %.

Die Patentschrift DE-C-3 522 395 sieht vor, das Altpapier ebenfalls "voreinzuweichen", in einem Reaktionsturm zu stapeln und im Turmunterteil mittels Stofflöser aufzulösen, wobei grobe Verunreinigungen des Altpapiers, wie z.B. Plastikfolien, Drahtstücke und dergleichen kontinuierlich aus der Faserstoffsuspension entfernt werden.

Dieses Verfahren hat den Nachteil, daß nur ein geringer Anteil Verunreinigungen im Altpapier vorhanden sein darf, da es z.B. bei einem höheren Anteil als 1 % (bezogen auf otro Altpapier) zu Brückenbildung, Verstopfung etc. im Turmunterteil kommen kann, deren Behebung nur zeitaufwendig, verbunden mit erheblichen Produktionseinbußen, vorgenommen werden kann.

Aus der EP-A-0 233 517 ist ein Verfahren und eine Anlage zur Entfernung von Farbpartikeln aus einer aus Altpapier gewonnenen Faserstoffsuspension bekannt. Bei dieser Ausführung wird die gesamte zu reinigende Faserstoffsuspension unter Druck ausgewaschen und gleichzeitig über ein Sieb solcher Siebfeinheit geführt, daß sich ein gewaschener, nahezu alle brauchbaren Fasern enthaltender erster Suspensionsanteil vor dem Sieb und ein ausgewaschener, Farbpartikel und Faserreste enthaltender zweiter Suspensionsanteil als Durchlauf ergeben, und daß der erste Suspensionsanteil sortiert und der zweite Suspensionsanteil durch Flotieren von den Farbpartikeln befreit wird. Die Anlage zur Durchführung des Verfahrens umfaßt eine Einweich- und Auflösetrommel mit einer Zufuhr für das aufzulösende Altpapier, Auflöse- und Deinkingchemikalien und evtl. Einweichwasser. Der Auflösetrommel ist ein Mischer nachgeschaltet, in dem im Zuge des Durchlaufes das aufgelöste Altpapier gelangt. Im Mischer wird die Stoffdichte des aufgelösten Fasermaterials durch Zusetzen von Wasser so weit herabgesetzt, daß sich eine sortierfähige Fasersuspension ergibt. Nach dem Durchlaufen des Mischers gelangt die Fasersuspension in einen Sortierzylinder, der sich ebenfalls um eine Achse dreht und einen als Siebblech ausgebildeten Trommelmantel besitzt. Unterhalb des Sortierzylinders sind in Richtung der Zylinderachse hintereinander zwei Bütten angeordnet. In der ersten Bütte wird der größte Teil des Gutstoffs, d.h. die brauchbaren Fasern, in Form einer Fasersuspension aufgefangen, während die zweite Bütte dem Auffangen des Waschwassers dient, mit dem von dem Inneren des Sortierzylinders verbliebenen Spuckstoff die noch brauchbaren Fasern abgewaschen werden. Der in der ersten Bütte aufgefangene Gutstoff wird mit Hilfe einer Pumpe abgezogen und weiteren Sortiereinrichtungen zugeführt, sowie letztendlich unter Druck in ein Waschgerät gefördert, in dem die Fasersuspension unter Druck mit Waschwasser gewaschen werden kann. Die Wascheinrichtung ist dabei als Drucksortierer ausgeführt und weist einen Waschwasseranschluß und einen Spuckstoff- sowie einen Gutstoffauslaß auf. Der Spuckstoffauslaß ist dabei mit einer weiteren Sortiereinrichtung gekoppelt, und der Gutstoffauslaß ist mit einer Flotationseinrichtung verbunden.

Der Nachteil der in der EP-A-0 233 517 offenbarten Anordnung besteht im wesentlichen darin, daß die Einsparung an Chemikalien durch zusätzliche Sortiervorgänge zur Erzielung eines möglichst geringen zu reinigenden Teils der Fasersuspension erreicht werden soll. Die Anzahl an Sortierstufen schlägt sich in einem erhöhten konstruktiven Aufwand nieder und erhöht damit gleichzeitig mögliche Schwachstellen, die eine Kontinuität des Aufbereitungsprozesses verhindern können sowie den zeitlichen Aufwand.

Die Aufgabe der Erfindung ist es, bei Aufbereitung von Altpapier, das einen sehr hohen Anteil von mit Druckfarben bedrucktem Papier enthält, die Entfernung der Druckfarben sehr effizient und wirksam durchzuführen. Dabei soll weiter keine Vorsortierung des Altpapiers nötig sein, so daß also auch alle Verunreinigungen in den Aufbereitungsprozeß gelangen dürfen. Ferner soll auch der zeitliche Aufwand und der Aufwand an Chemikalien relativ günstig sein.

Die erfindungsgemäße Lösung der Aufgabe ist durch die kennzeichnenden Merkmale des Anspruchs 1 charakterisiert. Die vorrichtungsmäßige Umsetzung ist im Anspruch 10 wiedergegeben.

Das hier beschriebene Verfahren vermeidet die obigen Nachteile, da hierbei das Verunreinigungen sowie evtl. Drahtstücke enthaltende Altpapier in einer Voreinweichtrommel bei Stoffdichten > 12 % und Temperaturen > 18° C in Anwesenheit von Chemikalien über mehr als 20 Minuten behandelt wird und die enthaltenen Grobverunreinigungen im Anschluß daran, ggf. ohne Zwischenverdünnung, mittels Grobsortiertrommel oder Grobsortiergerät (z.B. Plansortierer oder dgl.) bei einer Konsistenz von mindestens 13 % (bezogen auf otro Altpapierfasern) abgetrennt werden. Hierbei sind die Öffnungen (Lochungen, Schlitze etc.) so zu wählen, daß keine noch unaufgelösten Altpapierstücke mit dem Rejekt verworfen werden.

Das noch unverdünnte Accept wird in einer gegebenenfalls dritten Trommel oder einem Stofflöser weiterbehandelt und pumpfähig aufgelöst, wobei dazu ggf. weitere druckfarbenablösende und oder bleichende Chemikalien zugesetzt werden können. Im Anschluß daran kann sich ein weiterer Sortiervorgang anschließen.

Dieses Auflösen der dritten Prozeß-Anfangsstufe erfolgt bis auf eine sehr geringe Stippengröße, so daß mindestens 95 % des Altpapiers eine Sieblochung beispielsweise in einem Scheibensortierer von 10 mm Durchmesser passieren kann.

Das beschriebene, neuartige Verfahren hat den Vorteil, daß der Voreinweich-/Auflöseprozeß kontinuierlich vorgenommen und der Auflöse-/Druckfarbenablöse- und evtl. Bleichprozeß so effizient durchgeführt werden kann, daß dadurch eine erheblich schnellere und effizientere Druckfarbenabtrennung in den nachfolgenden Prozeßstufen und eine erheblich schnellere und effizientere Bleichwirkung erreicht werden kann. Insbesondere durch die Verwendung von rotierenden Trommeln für die ersten beiden Stufen wird die Einwirkungszeit der Chemikalien bei sehr hoher Konsistenz günstig relativ lang, zumal auch in der dritten Stufe eine hohe Konsistenz vorliegt.

Es ist ja üblich, daß das Entfernen der Druckfarben schließlich in einer Flotationsanlage erfolgt, die überwiegend mehrstufig ausgebildet ist. Die nachfolgenden Stufen der Feinsortierung und Flotation sind wegen der bekannten Ausbildung derselben nicht näher erläutert.

Für den Aufbereitungsprozeß in den ersten drei Stufen kommen als Chemikalien vorzugsweise in Frage 0,5 bis 4 % NaOH sowie 0,4 bis 1,5 % H₂O₂ und 0,5 bis 3 % Wasserglas sowie 0,1 bis 0,5 % DTPA, bezogen auf otro-Eintrag Altpapier.

Die Chemikalien, die in die Bleichstufe eingegeben werden, können noch ergänzt werden durch weitere Chemikalien in der dritten Stufe, der Auflösestufe.

Nachfolgend wird die Erfindung anhand der in der Zeichnung prinzipmäßig dargestellten Anordnungen erläutert.

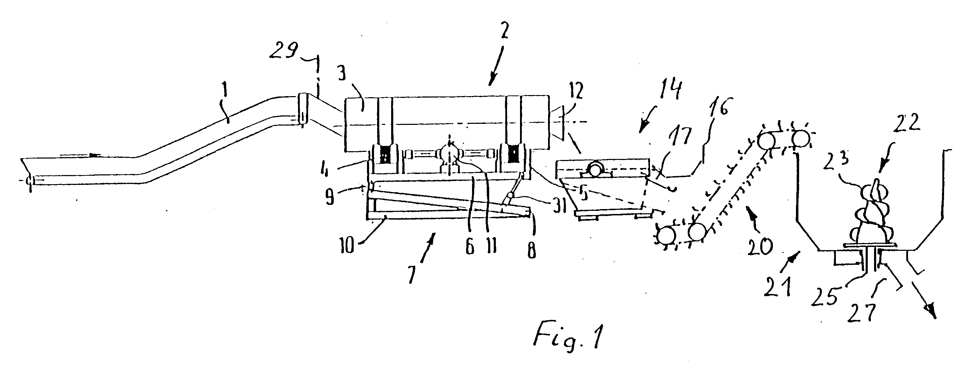

Dabei stellt Figur 1 prinzipmäßig eine Ansicht einer ersten erfindungsgemäßen Anordnung und
Figur 2 einer zweiten erfindungsgemäßen Anordnung unter Verwendung einer gelochten Siebtrommel und
Figur 3 eine andere Variante gemäß der Erfindung dar.

Das Altpapier wird in Ballenform über den Bandförderer 1 der um die Horizontale, strichpunktiert angedeutete Achse rotierenden Trommel 2 zugeleitet, und in deren Eintragsende 3 eingeführt. Diese Trommel ist rotierbar auf Rollen 4 gelagert und durch einen Motor 11 über die dargestellten Gelenkwellen angetrieben. Die Trommel ist hier - was aber nicht unbedingt erforderlich ist - neigbar ausgebildet durch ein Gestell 10, das ein Gelenk 9 auf der hier linken Seite und einen Hubzylinder 31 mit Hubstange auf der rechten Seite aufweist. Zu dem Zweck ruhen Antriebsmechanismus und die Stützteile der Trommel auf einem Gestell 6. Somit erreicht der Trommelinhalt mehr oder weniger schnell - je nach Neigung der Trommel - den Austrittsschacht 12, von wo die eingeweichte Papierstoffmenge einem Vibrationssortierer 14 aufgegeben wird. Die Einweichzeit in der Trommel beträgt mindestens 15 Minuten und im allgemeinen um die 30 Minuten oder mehr. In dem Vibrationssortierer werden die groben Verunreinigungen aussortiert und einer Aufnahmeeinrichtung 16 zugeführt, die in ihrem unteren Teil auch als Förderband ausgebildet sein kann. Der aussortierte Faserstoff wird als Gutstoff über die Rutsche 17 auf ein Förderband 20 aufgegeben, das den Altpapierstoff mit der hohen Konsistenz, die ja beibehalten worden ist, dem Stofflöser 21 zugeführt wird. Die Konsistenz bei dem Einweichvorgang in der Trommel beträgt mindestens 13 %, es können hier im wesentlichen sogar 25 bis 35 % vorliegen, jeweils natürlich bezogen auf otro-Stoffeintrag. Die Chemikalien werden auf geeignete Weise dem Stoff in der Einweichtrommel 3 zugemischt, insbesondere mit dem Einweichwasser durch Leitung 29 zugeführt. Weitere Chemikalien können auch dem Stofflöser 21 aufgegeben werden.

Der Lochdurchmesser der Siebplatte des Vibrationssortierers beträgt zwischen 30 und 60 mm.

Dieser Stofflöser weist vorzugsweise einen mit einer vertikalen Welle versehenen Rotor 22 auf, der an seinem Umfang im wesentlichen wendelförmige, nach oben sich spiralförmig im Außendurchmesser abnehmende und unter Umständen auch sich verschmälernde Umwälzrippen 23 trägt. Die Welle des Rotors ist mit 25 angedeutet. Über den Abzugsstutzen 27 wird aus dem Stofflöser aussortierter Gutstoff abgelassen, der vorher vorzugsweise eine Siebplatte passiert hat.

Es kann auch für alle drei beschriebenen Prozeßstufen eine einheitliche Konsistenz zwischen 14 und 28 % angewendet werden.

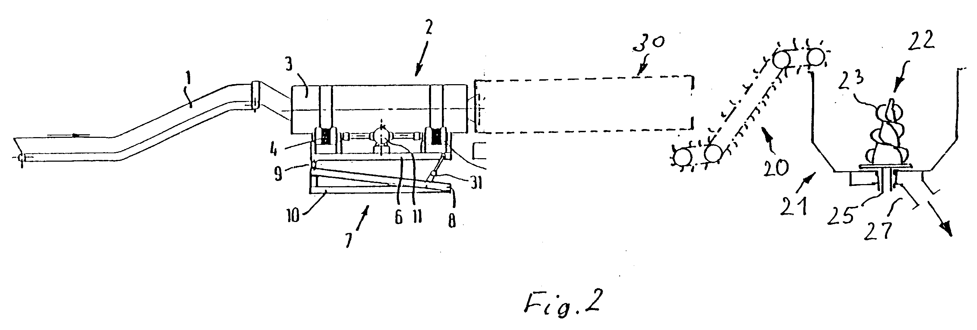

Folgende Änderungen in der dargestellten Anordnung sind möglich:
1. Anstelle des Vibrationssortierers 14 kann ebenfalls eine rotierbare Trommel 30 (siehe Fig. 2) mit perforiertem Mantel vorgesehen werden, die ebenfalls um eine horizontale Achse rotierbar ist. In diesem Falle ist wie bei der Trommel 3 das Eintragsende die eine Stirnseite und das Austragsende für die Verschmutzungen die andere Stirnseite, während der Gutstoff durch die Perforationen des Trommelmantels abgeschieden wird. Die Sieblochung beträgt dort vorzugsweise zwischen 30 und 60 mm. Auf diese Weise wird gewährleistet, daß Faserstoff nicht mit den Verschmutzungen verworfen wird.
2. Anstelle des Stofflösers 25 könnte ebenfalls eine um eine horizontale Achse rotierbare Trommel vorgesehen sein, die an dem Austragsende ebenso ausgebildet ist wie die Trommel 2 und in diesem Bereich auch eine Perforation aufweisen könnte. Ist die Perforation nicht vorhanden, wäre der Austrag wie bei der Trommel 2 an der einen Stirnseite. Andernfalls könnte Gutstoff durch die Perforation und die den überwiegenden Anteil an Spuckstoff enthaltende Fraktion durch die stirnseitige Austragsöffnung abgezogen werden.

An die dargestellten drei Stufen würden sich dann weitere Sortierstufen und insbesondere eine Flotationsanlage anschließen, um letztlich die abgelösten Druckfarben aus der Fasersuspension zu entfernen. Dies würde nach dem üblichen Verfahren unter Einsatz der bekannten Flotations-Chemikalien erfolgen, wie insbesondere Seife oder Fettsäure.

Es ist dabei vorzugsweise vorgesehen, daß das Einweichen unter Umwälzbewegungen und das Sortieren und gegebenenfalls das Auflösen der dritten Stufe in einer rotierenden Trommel mit horizontaler Drehachse unter Umwälz- und/oder abrupten Bewegungen, gegebenenfalls verbunden mit Hochschleudern und/oder Herabfallenlassen des Altpapiers erfolgt.

Ferner wird - um wenig Antriebsleistung aufwenden zu müssen - günstig die Drehzahl der Einweichtrommel 2 gering gehalten - höchstens 15 U/min, vorzugsweise 4 bis 10, eventuell geringer als die der Siebtrommel 30 - und auf stark ausgeprägte Mitnehmerrippen verzichtet, um eine sanfte Umwälzung des Trommelinhalts zu haben - anders als in der Sortiertrommel 30.

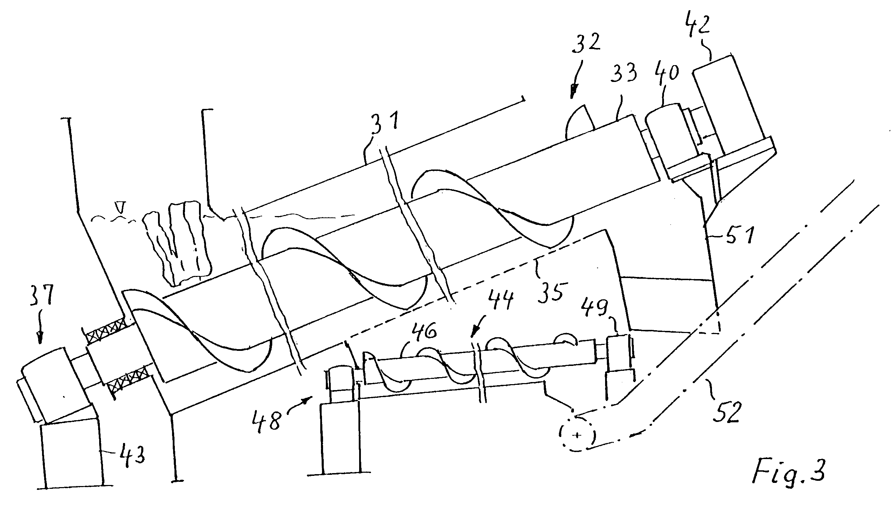

In Fig. 3 ist eine Variante dargestellt, bei der Einweichen und Sortieren entlang einer Förderschnecke 32 stattfindet. Deren Welle 33 ist in Lagern 37 und 40 gelagert und wird angetrieben durch den Motor 42. Das untere Lager 37 stützt sich auf einem Lagerfundament 43 ab. Der erste Teil des die Schnecke umgebenden Gehäuses 31 ist unperforiert und der zweite Teil ist an seinem Boden - wie bei 35 angedeutet - mit einer Sieblochung zwischen 30 und 60 mm versehen. Das hier aussortierte, gute Fasermaterial wird durch die Schnecke 44 abtransportiert in Richtung auf einen Bandförderer 52. Die abzuscheidenden groben Verunreinigungen gehen durch den Schacht 51 am Ende der Förderschnecke ab. Die Welle 46 der kleinen Schnecke 44 ist an den Enden in Lagern 48 und 49 gelagert. Der Antrieb ist hier nicht dargestellt. An die dargestellte Anordnung kann sich dann - wie in den anderen Figuren dargestellt - ein Stofflöser oder eine Auflösetrommel mit horizontaler Drehachse anschließen.

Vorzugsweise wird die Förderschnecke 32 reversierend angetrieben. Es kann ein Eintrag der Ballen von Altpapier in im wesentlichen unzerteiltem Zustand erfolgen.

## Patentansprüche

1. Verfahren zur Aufbereitung von bedrucktem Altpapier mit einer Nachbehandlung in einer Deinking-Anlage, beginnend mit einer Einweich- und Auflösungsstufe einschließlich einer Grobsortierstufe, wobei
die Einweich- und Auflösungsstufe unter Zugabe von den üblichen Prozeßchemikalien für das Auflösen des Altpapieres und das Ablösen der Druckfarben durchgeführt wird, und
das Altpapier einschließlich im wesentlichen aller im Altpapier enthaltenen, schweren Verunreinigungen, wie Teile aus Holz, Glas, Kunststoff oder Metall einschließlich Stücken von Metall-Bandagen der Altpapierballen diesen Anfangsstufen zugeleitet wird, gekennzeichnet durch die folgenden Merkmale:
die ersten drei Prozeßstufen erfolgen bei einer Konsistenz von mindestens 13 % in der Reihenfolge Einweich- und Auflösungsstufe, Grobsortierstufe und weiteres, umfangreiches Auflösen des Altpapieres und Ablösung der Druckfarbe;
die Zugabe der Prozeßchemikalien in der Einweich- und Auflösungsstufe erfolgt zu einem Anteil von mindestens 40 % der für das Auflösen des Altpapiers und das Ablösen der Druckfarben benötigten Gesamtmenge.

2. Verfahren nach Anspruch 1, dadurch gekennzeichnet, daß das Einweichen unter Umwälzbewegungen und das Sortieren und gegebenenfalls das Auflösen der dritten Stufe in einer rotierenden Trommel mit horizontaler Drehachse (2) unter Umwälz- und/oder abrupten Bewegungen, gegebenenfalls verbunden mit Hochschleudern und/oder Herabfallenlassen des Altpapiers erfolgt.

3. Verfahren nach Anspruch 1 oder 2, dadurch gekennzeichnet, daß das Sortieren in der Grobsortierstufe bei Lochgrößen zwischen 30 und 60 mm erfolgt.

4. Verfahren nach einem der Ansprüche 1 bis 3, dadurch gekennzeichnet, daß sämtliche ersten drei Aufbereitungsstufen des Altpapiers bei der gleichen Konsistenz zwischen 14 und 28 % durchgeführt werden.

5. Verfahren nach einem der Anprüche 1 bis 4, dadurch gekennzeichnet, daß Altpapier aufbereitet wird, das mindestens zu 80 % Druckfarbe in starkem Maße aufweist.

6. Verfahren nach einem der Ansprüche 1 bis 5, dadurch gekennzeichnet, daß die Einweichstufe in einer um eine horizontale Achse rotierbaren Trommel (2) durchgeführt wird, die das Altpapier in einer Zeit von mindestens 15 min. durchläuft.

7. Verfahren nach Anspruch 6, dadurch gekennzeichnet, daß als Arbeitseinrichtung der Grobsortierstufe ein Vibrationssortierer (14) oder eine um eine horizontale Achse rotierbare, mit einem perforierten Mantel versehene Siebsortiertrommel (30) vorgesehen ist.

8. Verfahren nach Anspruch 6 oder 7, dadurch gekennzeichnet, daß für die Auflösestufe, also die dritte Stufe, ein Stofflöser (21) vorgesehen ist, in dessen Boden oder Bodennähe ein Rotor (22) mit einer vertikalen Achse rotierbar gehalten ist, der an seinem Umfang wendelförmige Mitnehmerelemente (23) für die Suspension aufweist.

9. Verfahren nach Anspruch 6 oder 7, dadurch gekennzeichnet, daß für die Auflösestufe, also die dritte Stufe, eine um eine horizontale Achse rotierbare Trommel mit dem Eintragsende an der einen Stirnseite und dem Austragsende an der anderen Stirnseite vorgesehen ist, deren dem Austragsende benachbarter Teil zumindest Sieböffnungen im Trommelmantel aufweist.

10. Einrichtung durch Durchführung des Verfahrens nach einem der Ansprüche 1 bis 5, gekennzeichnet durch die folgenden Merkmale:
es ist ein Behälter (31) mit einer mehr oder weniger gegen die Horizontale geneigten, sich im wesentlichen längs des Behälters (31) erstreckenden Transportschnecke (32) vorgesehen;
der Behälter weist in seinem dem Abförderende der Transportschnecke (32) näheren Teil zumindest am Boden oder im Bodenbereich eine Siebperforation (35) auf;
dem Behälter ist ein Stofflöser (21) oder eine Auflösetrommel mit im wesentlichen horizontaler Drehachse nachgeschaltet.

11. Einrichtung nach Anspruch 10, dadurch gekennzeichnet, daß eine kleinere Transportschnecke (44) unterhalb des Behälterbodens im Bereich des Siebteils (35) desselben angeordnet ist.

## Claims

1. Method for processing printed waste paper with after-treatment in a deinking installation commencing with a steeping and dissolution stage comprising a coarse sorting stage, where the steeping and dissolution stage is carried out with the addition of the usual processing chemicals for dissolving waste paper and separating the printing ink and where
the waste paper is supplied together with all the heavy impurities contained in waste paper such as pieces of wood, glass, plastic or metal including pieces of metal binding from the waste paper bales, characterised in that the first three stages of the process are carried out with a consistency of at least 13 % in the sequence steeping and dissolution stage, coarse sorting stage and further extensive dissolution of the waste paper and separation of the printing ink, the processing chemicals in the steeping and dissolution stage are added in an amount of at least 40% of the total quantity needed for dissolving the waste paper and separating the printing ink.

2. Method according to claim 1, characterised in that the steeping is performed with circulating movements and that the sorting and if necessary the dissolution of the third stage is performed in a rotating drum with a horizontal axis of rotation (2) with circulating and/or abrupt movements, possibly connected with throwing up the waste paper and/or allowing it to fall.

3. Method according to claim 1 or 2 characterised in that hole sizes of between 30 and 60 mm are used for sorting in the coarse sorting stage.

4. Method according to one of claims 1 to 3 characterised in that all the first three processing stages of the waste paper are performed at the same consistency of between 14 and 28 %.

5. Method according to one of claims 1 to 4, characterised in that waste paper is processed which contains a large amount of printing ink - at least 80%.

6. Method according to one of claims 1 to 5, characterised in that the steeping stage is carried out in a drum (2) rotatable about a horizontal axis through which the waste paper passes in a time of at least 15 minutes.

7. Method according to claim 6, characterised in that a vibration sorter (14) or a sieve sorting drum (30) rotatable about a horizontal axis and equipped with a perforated sleeve is provided as a working device for the coarse sorting stage.

8. Method according to claim 6 or 7 characterised in that a hydrapulper (21) is provided for the dissolving stage, i.e. the third stage, at the base of which or near the base of which a rotor (22) with a vertical axis is rotatably supported which has helical catching elements (23) for suspension on its periphery.

9. Method according to claim 6 or 7, characterised in that a drum rotatable about a horizontal axis is provided for the dissolving stage, i.e. the third stage, with the feed end at one outside face and the discharge end at the other outside face, the part adjacent to the discharge end of which at least has sieve openings in the drum sleeve.

10. Apparatus for performing the method according to one of claims 1 to 5, characterised by the following features:
a container (31) is provided with a conveyor screw (32) inclined more or less to the horizontal extending mainly along the length of the container (31);
the container has sieve perforations (35) at least on the base or in the base area at its part nearer the removal end of the conveyor screw (32);
a hydrapulper (21) or a dissolution drum with am essentially rotational axis is connected to the container.

11. Apparatus according to claim 10, characterised in that a smaller conveyor screw (44) is arranged beneath the container base in the area of the sieve part (35) thereof.

## Revendications

1. Procédé pour le traitement du papier usé imprimé, par un traitement ultérieur dans un dispositif de Deinking, commençant par une étape de trempage et de dilution y compris une étape de triage grossier, dans lequel l'étape de trempage et de dilution est réalisée par les procédés chimiques usuels de dilution du papier usé et l'élimination des couleurs d'impression, et dans lequel
le papier usé y compris substantiellement toutes les impuretés lourdes qu'il contient, morceaux de bois, verre, matière plastique ou métal y compris des pièces métalliques de cerclage des balles de papier sont soumis à ces étapes préliminaires, caractérisé :
en ce que les trois premières étapes du procédé ont lieu à une concentration d'au moins 13% et comprennent successivement : l'étape de trempage et de dilution, l'étape de triage grossier et autre, et l'étape de grande dilution du papier usé et élimination des couleurs d'impression, et
en en ce que l'admission des produits chimiques de traitement a lieu au cours de l'étape de trempage et de dilution à proportion d'au moins 40% de la quantité totale nécessaire pour la dilution du papier usé et l'élimination des couleurs d'impression ;

2. Procédé selon la revendication 1, caractérise :
en ce que le trempage a lieu avec un mouvement de révolution, tandis que le triage, et le cas échéant la dilution de la troisième étape, a lieu dans un tambour rotatif (2) à axe de rotation horizontal animé d'un mouvement de révolution et/ou de mouvements brusques, mouvements liés le cas échéant à la projection et/ou à la chute du papier usé ;

3. Procédé selon l'une quelconque des revendications 1 ou 2, caractérisé :
en ce qu'un tamisage a lieu dans l'étape de tamisage grossier, avec des trous de grandeur comprise entre 30 et 60 mm ;

4. Procédé selon l'une quelconque des revendications 1 à 3, caractérisé :
en ce que les trois premières étapes de préparation du papier usé sont réalisées avec la même concentration allant de 14 à 28% ;

5. Procédé selon l'une quelconque des revendications 1 à 4, caractérisé :
en ce que les couleurs d'impression forment jusqu'à 80% en poids du papier usé traité ;

6. Procédé selon l'une des revendications 1 à 5, caractérisé :
en ce que l'étape de trempage est réalisée dans un tambour (2) rotatif autour d'un axe horizontal, que traverse le papier usé en au moins 15 minutes;

7. Procédé selon la revendication 6, caractérise :
en ce qu'il est prévu comme dispositif de travail de l'étape de triage grossier, soit un tamis vibrant (14), soit un tambour de triage à tamis (30) rotatif autour d'un axe horizontal et constitué d'une gaine perforée ;

8. Procédé selon la revendication 6 ou 7, caractérisé : en ce que pour l'étape de dilution, à savoir la troisième étape, il est prévu un disperseur de matière (21) dans le corps duquel, ou à proximité duquel corps, un rotor (22) est supporté rotativement par un arbre vertical, lequel rotor présente sur sa périphérie des éléments d'entraînement (23) de la suspension, de forme hélicoïdale ;

9. Procédé selon la revendication 6 ou 7, caractérisé : en ce que pour l'étape de dilution, à savoir la troisième étape, il est prévu un tambour rotatif autour d'un axe horizontal ayant une extrémité de réception sur l'un de ses côtés frontaux, et une extrémité de distribution sur l'autre côté, et dont la partie avoisinant l'extrémité de distribution comporte, au moins dans la gaîne du tambour, des trous de tamisage ;

10. Dispositif pour la mise en oeuvre d'un procédé selon l'une des revendications 1 à 5, caractérisé :
en ce qu'il est prévu une capacité (31) pourvue d'au moins une vis sans fin de transport (32) inclinée sur l'horizontale, ladite capacité s'étendant essentiellement le long du réservoir (31) ;
et en ce que la capacité est conformée en un tamis (35) dans sa partie située au-dessous de l'hélice de transport (32), un disperseur de matière (21), ou bac de dilution, ayant un axe rotatif substantiellement horizontal étant associé au réservoir ;

11. Dispositif selon la revendication 10, caractérisé :
en ce qu'une vis sans fin de transport (44), plus petite, est disposée au-dessous du corps du boîtier, dans la zone de la partie du tamis (35) de celui-ci.
